# EUROPÄISCHE PATENTSCHRIFT

(11) **EP 2 918 985 B1**
(45) Veröffentlichungstag und Bekanntmachung des Hinweises auf die Patenterteilung: **01.02.2017**
(21) Anmeldenummer: 15158332.5
(22) Anmeldetag: 10.03.2015
(51) Int. Cl.: G01L 1/12, G01L 3/10

(54) **KONSTRUKTIONSELEMENTE ZUR ERFASSUNG VON MESSGRÖSSENVERURSACHTEN GESTALTS- ODER TORSIONSVERÄNDERUNGEN**
CONSTRUCTIONAL ELEMENTS FOR THE DETECTION OF CHANGES IN SHAPE OR TORSION DUE TO MEASURED VALUES
ÉLÉMENT DE CONSTRUCTION DESTINÉ À DÉTECTER DES MODIFICATIONS DE TORSION OU DE FORME DUES À DES GRANDEURS MESURÉES

(30) Priorität: 11.03.2014 AT 1752014
(43) Veröffentlichungstag der Anmeldung: 16.09.2015
(73) Patentinhaber: Braunschmid, Franz, 1100 Wien (AT)
(72) Erfinder: Braunschmid, Franz, 1100 Wien (AT); David, Veronika, 2452 Mannersdorf am Leithagebirge (AT)
(74) Vertreter: Patentanwälte Pinter & Weiss OG

(56) Entgegenhaltungen:
- EP-A2- 1 083 420
- WO-A1-91/13327
- WO-A2-2006/091089
- GB-A- 1 329 147
- US-A- 3 280 623
- US-A- 3 718 047
- US-A1- 2011 221 312

## Beschreibung

Die Erfindung betrifft Konstruktionselemente zur Erfassung von messgrößenverursachten Gestalts- oder Torsionsveränderungen.

Bekannte Verfahren zur Erfassung messgrößenverursachter Gestalts- oder Torsionsveränderungen primärer Verzerrungskörper beschränken sich auf das Aufkleben sekundärer Verzerrungskörper in Form von Dehnungsmessstreifen in Oberflächenbereichen, welche im Betrieb der Messgröße folgende Verzerrungen erfahren.

Die sehr geringe Messgrößenempfindlichkeit von Dehnungsmessstreifen gibt Anlass zur Schaffung künstlicher Schwachstellen in primären Verzerrungskörpern, aus denen die Notwendigkeit von sowohl zusätzlichen Platz erfordernden als auch zusätzliche Kosten verursachenden mechanischen Überlastungsschutzeinrichtungen resultiert.

Die Dehnungsmessstreifentechnik setzt Zugänglichkeit und eine in vielen potentiellen Anwendungsbereichen überhaupt nicht verfügbare Großflächigkeit der verzerrbaren Oberflächenbereiche voraus, und ihre Anwendung ist auf diese Oberflächenbereiche beschränkt.

Dehnungsmessstreifentechnik setzt Messkräfte voraus, welche sowohl den primären als auch die im Allgemeinen vier zu einer Wheatstone'schen Brücke zusammengeschalteten sekundären Verzerrungskörper zu verzerren im Stande sind. Auch dieses Charakteristikum schließt viele potentielle Anwendungsbereiche aus.

Notwendige akribische Vorbereitungsarbeiten an den im Betrieb langfristig verzerrten, kriechgefährdeten Klebeflächen sowie aufwändige störsignalsichere elektrische Verkabelung zur Versorgungs- und Auswerteelektronik stellen ausgesprochen nachteilige Charakteristika dar.

Die Erfindung vermeidet diese essentiellen Nachteile dadurch, dass der mechanische Teil aus drei von einem gemeinsamen Zentrum oder Wurzelbereich ausgehenden Armen gebildet ist, mindestens einer der Arme entweder an einem Trägerkörper starr angebracht oder in diesen Trägerkörper integriert ist, an einem der drei Arme der erste Teil und an einem anderen Arm oder am Trägerkörper der zweite Teil einer zweiteiligen Spule-Anker- oder Spule-Spule-Kombination angebracht ist, wobei im Betrieb der Anker bzw. die zweite Spule im magnetischen Wechselfeld der ersten Spule liegt.

Damit wird durch Erfassung messgrößenverursachter gegenseitiger Positionsveränderungen zweier Oberflächenelemente an beliebig massiven oder zarten Körpern eine hohe Messgenauigkeit erzielt, wobei diese Positionsveränderungen weitab von messgrößenbedingt verzerrten Oberflächenbereichen liegen können und ihre geometrischen Ausdehnungen lediglich etwa punktuelle Berührungen oder Materialübergänge zulassen müssen.

Die Erfindung betrifft somit eine dreiarmige Grobgestalt und aus ihr durch Veränderung von Abmessungen oder Krümmungen oder Winkeln hergeleitete Varianten dreiarmiger Konstruktionselemente sowie deren Kombinationen mit oder deren Einbindungen in andere Körper zwecks magnetisch-induktiver Erfassung von Messgrößen aus messgrößenverursachten Gestaltsveränderungen oder Torsionsveränderungen.

Dabei können diese Konstruktionselemente zweckentsprechend in andere Körper eingebunden oder integriert oder selbst Sensorkörper sein, wobei jeweils an einem zeigerartig frei endenden Arm ein Teil einer zweiteiligen Spule-Anker- oder Spule-Spule-Kombination angebracht ist, bei welcher im Betrieb der Anker oder die zweite Spule im magnetischen Wechselfeld der ersten Spule liegt, und der jeweilige zweite Teil an einer Referenzposition angebracht ist.

Eine messgrößenbedingte Veränderung der gegenseitigen Positionen von Spule und Anker folgert eine Veränderung der elektrischen Eigenschaften der Spule zufolge Ankerrückwirkung, woraus auf die Veränderung der gegenseitigen Positionen und damit auf die Messgröße rückgeschlossen werden kann. Bei einer Spule-Spule-Kombination kann aus der Veränderung ihrer elektrischen Übertragungseigenschaften auf ihre gegenseitige Positionsveränderung und daraus auf die Messgröße rückgeschlossen werden.

Es ist mit sehr wenig Aufwand eine ausgesprochen hohe Messgrößenempfindlichkeit erreichbar, und die Generierung auf einfachste Weise störungssicher übertragbarer Signale kann direkt am Ort der Messgrößenerfassung erfolgen.

Da der Einsatz eines erfindungsgegenständlichen dreiarmigen Konstruktionselementes samt Elektronik an einer im Betrieb rotierenden Welle eine drahtlose Übertragung sowohl von elektrischer Energie als auch von Daten- oder Steuersignalen nahelegt, stellt die Erfindung auch eine für diese Erfordernisse geeignete Energie- und Signalübertragungslösung bereit.

Die Erfindung betrifft somit zusammengefasst ein dreiarmiges Konstruktionselement mit einem als Zeiger fungierenden frei endenden Arm nach Anspruch 1, an dem zwecks Erfassung seiner messgrößenbedingten Auslenkung der eine Teil einer zweiteiligen Spule-Anker- oder Spule-Spule-Kombination angebracht ist, der zweite Teil an einem anderen Arm oder an einem anderen Körper angebracht ist, wobei im Betrieb der Anker im magnetischen Wechselfeld (Eigenfeld!) der Spule liegt.

Gemäß der DE 102 04 916 A1 ist ein Hall-Element als magnetischer Feldsensor vorgesehen, welches im Fremdfeld eines Magneten (Permanentmagnet) liegt und Feldveränderungen erfassen kann. Es ist dabei weder ein dreiarmiges Konstruktionselement verwendet, noch eine Spule-Anker- bzw. Spule-Spule-Kombination vorgesehen.

Die DE 101 20 976 A1 offenbart ein nach dem Wirbelstromprinzip arbeitendes Sensorelement, bei welchem eine Signal gebende Fläche vorgesehen ist, deren Signalart oder Charakteristikum oder Sinn nicht näher erläutert ist.

Auch bei dieser Ausbildung ist weder ein dreiarmiges Konstruktionselement verwendet, noch eine Spule-Anker- bzw. Spule-Spule-Kombination.

Gemäß der DE 44 20 691 C1 ist ein Kraftaufnehmer aus einem nicht-magnetischen, elektrisch leitenden Material vorgesehen, wobei an einem Träger oder Ausleger zwei induktive, scheibenförmige, parallel zu den Lenkerstegen angeordnete Sensorelemente vorgesehen sind.

Dabei soll aufgrund des Umstandes, dass das Material der Lenkerstäbe nichtmagnetisch ist und eine Permeabilität von nahezu 1 hat, die Bewegung die Lenkerstege zu einer Änderung der sogenannten effizienteren Permeabilität führen, welche den eigentlichen Sensoreffekt beim Kraftaufnehmer ergeben.

Es wird auch bei dieser Ausbildung weder ein dreiarmiges Konstruktionselement verwendet, noch eine Spule-Anker- bzw. Spule-Spule-Kombination.

Die US 7,437,943 B2 zeigt eine völlig andere mechanische Konstruktion. Genau definierte Profilverläufe längs und quer, welche bei Messkraftangriff in einer etwa O-förmigen Ausnehmung, wo zwei Teile eines Drehwinkelsensors positioniert sind, ergeben als Folge einen Drehpunkt. Die Erfassungsweise des Drehwinkelsensors ist offengelassen.

Diese Ausbildung verwendet weder ein dreiarmiges Konstruktionselement, noch eine Spule-Anker- bzw. Spule-Spule-Kombination.

Mit der erfindungsgegenständlichen Spule-Anker-Kombination lassen sich, beispielsweise unter Verwendung handelsüblicher genormter Ferrit-Kerne [zwei Hälften] der Bauart P [IEC 60133] oder RM [IEC 62317-4] und der Ausführungsart "ohne Luftspalt" [sowohl als Spulenkern als auch als Anker verwendet], enorme und mit vergleichbar geringem Aufwand anders nicht erzielbare Messgrößenempfindlichkeiten erreichen. Mit handelsüblichen SMD-Spulen [surface-mounted device], beispielsweise solchen der Bauformbezeichnung 0603 nach EIA Standard, mit einem Volumen von etwa 1/20 mm³, können messtechnische Erfordernisse der Feinmechanik abgedeckt werden, für die bis dato keine vergleichbar einfachen und kostengünstigen Lösungen zur Verfügung stehen.

Vorteilhafte Weiterbildungen und konstruktive Ausgestaltungen des Erfindungsgegenstandes sind in den Unteransprüchen gekennzeichnet.

Im Folgenden wird die Erfindung an Hand graphischer Darstellungen beispielsweiser Ausführungsvarianten und Kombinationsvarianten näher erläutert, wobei mit "Varianten" im Sinne von DIN 199-1 oder REFA "Gegenstände ähnlicher Form und/oder Funktion" gemeint sind.

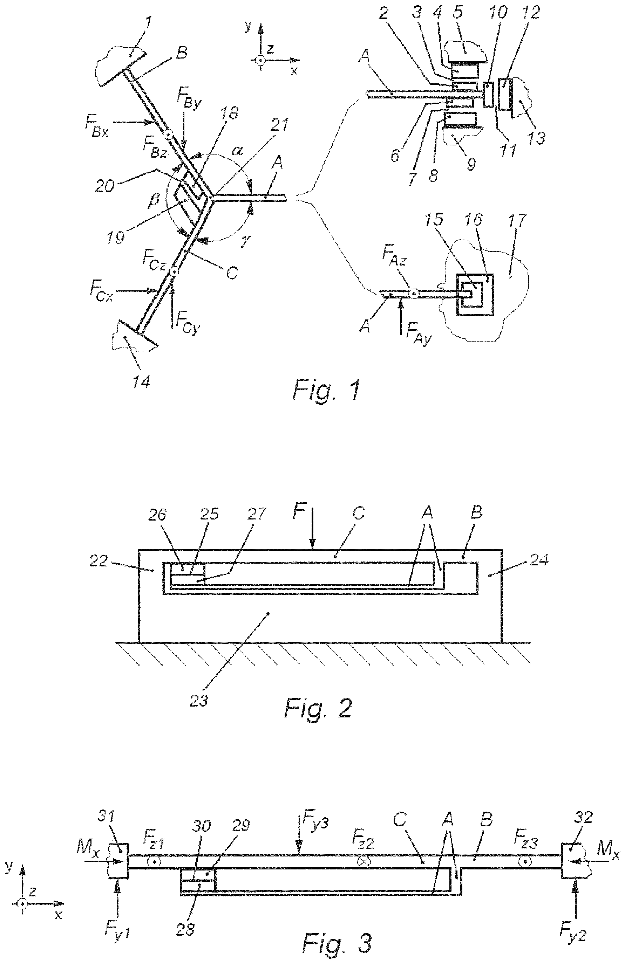

Fig. 1 zeigt zwecks grundsätzlicher Darlegung der Erfindungsidee ein besonders allgemein belastetes dreiarmiges Konstruktionselement A, B, C, 2, 6, 10, 15 mit drei von einem gemeinsamen Zentrum oder Wurzelbereich 21 unter beliebigen gegenseitigen Winkeln α, β, γ abstehenden und beliebig gestalteten Armen A, B, C, dessen erster Arm B an einem Trägerkörper 1 starr angebracht ist, und im Betrieb an ihm ihn verformende Messkraftkomponenten F_{Bx}, F_{By}, F_{Bz} angreifen können.

Der zweite Arm C kann gleichfalls starre Verbindung mit einem Trägerkörper 14 unterhalten, und auch an diesem Arm C können im Betrieb sowohl ihn als auch den Arm B verformende Messkraftkomponenten F_{Cx}, F_{Cy}, F_{Cz} angreifen. Der Trägerkörper 14 kann aber auch entfallen und der Arm C frei enden.

An beiden Armen B, C kann zwecks Erfassung ihrer messkraftbedingten gegenseitigen Abstands- oder Winkelveränderung je ein Teil 18, 19 einer zweiteiligen und im Betrieb über einen veränderbaren Luftspalt 20 hinweg magnetisch gekoppelten Spule-Anker- oder Spule-Spule-Kombination angebracht sein, deren magnetische Kopplung der die beiden Arme verformenden Messgröße folgt und auf sie rückschließen lässt.

Der dritte Arm A, dessen betriebliche Auslenkung aus den an den drei Armen A, B, C angreifenden Kraftkomponenten oder aus gegenseitigen Positionsveränderungen der Ankopplungsstellen des dreiarmigen Konstruktionselementes am selben Trägerkörper oder an verschiedenen Körpern 1, 14 resultieren kann, endet frei.

Im Bereich seines freien Endes ist an ihm der eine Teil 2 oder 6 oder 10 oder 15 einer im Betrieb über einen seiner Auslenkung folgenden Luftspalt 3 oder 7 oder 11 hinweg magnetisch gekoppelten zweiteiligen Spule-Anker- oder Spule-Spule-Kombination 2, 4 oder 6, 8 oder 10, 12 oder 15, 16 angebracht, und der jeweilige zweite Teil 4 oder 8 oder 12 oder 16 ist in Abhängigkeit von der erwartbaren Auslenkrichtung des dritten Armes A an geeigneter Stelle eines Trägerkörpers 5 oder 9 oder 13 oder 17 angebracht.

Aus der Veränderung der magnetischen Kopplung kann auf die Auslenkung des dritten Armes und damit auf die Messgröße rückgeschlossen werden. Eine Doppelanordnung 2, 3 bzw. 6, 7 ermöglicht eine differenzielle Erfassung.

Im Betrieb besteht zwischen erstem Teil und zweitem Teil eine durch ihre gegenseitigen Positionen bestimmte magnetische Kopplung, und mindestens einer der drei Arme (A, B, C) erfährt eine einer an ihm angreifenden Messgröße folgende elastische Gestaltsveränderung oder Torsionsveränderung mit damit einhergehender Veränderung der gegenseitigen Positionen und der magnetischen Kopplung der zwei Teile der zweiteiligen Spule-Anker- oder Spule-Spule-Kombination.

Fig. 2 zeigt einen Kraftsensor mit etwa U-förmig gestaltetem Trägerkörper 22, 23, 24, in dessen ersten Endabschnitt 22 der erste Arm C des dreiarmigen Konstruktionselementes A, B, C, 27 fließend übergeht, und in dessen zweiten Endabschnitt 24 der zweite Arm B fließend übergeht.

Am frei endenden dritten Arm A ist der erste Teil 27 einer zweiteiligen Spule-Anker- oder Spule-Spule-Kombination 26, 27 angebracht, dessen betriebliche magnetische Kopplung mit dem zweiten Teil (26) über einen veränderbaren Luftspalt 25 hinweg der Messgröße F folgt, wenn aus deren Angriff eine Durchbiegung der in den Trägerkörper übergehenden Arme B, C und eine Auslenkung des frei endenden Armes A resultiert. In dem in Fig. 2 praxisnahe konkretisierten Ausführungsbeispiel korrespondieren die Arme A, B, C mit den ebenso benannten Armen der Allgemeindarstellung in Fig. 1, und die Endabschnitte 22, 23 des Trägerkörpers 22, 23, 24 korrespondieren mit den Trägerkörpern bzw. Trägerkörperbereichen 1, 14 in Fig. 1.

Der in Fig. 2 in den Trägerkörper fließend übergehende Endabschnitt des ersten Armes als Stelle der Anbringung des zweiten Teiles 26 der Spule-Anker- oder Spule-Spule-Kombination korrespondiert mit dem Trägerkörper bzw. Trägerkörperbereich 5 in Fig. 1.

Der andere Endabschnitt 24 des Trägerkörpers in Fig. 2, in den der Endabschnitt des Armes C fließend übergeht, korrespondiert mit dem Trägerkörper bzw. Trägerkörperabschnitt 14 in Fig. 1.

Fig. 3 zeigt eine entweder als Kraftsensor oder als Drehmomentsensor oder als Biegemomentsensor nützbare praxisnahe Gestaltungsvariante mit einem dreiarmigen Konstruktionselement A, B, C, 28. Die Arme A, B, C in Fig. 3 korrespondieren mit den ebenso benannten Armen in Fig. 1.

Bei Angriff von Messkräften F_{y1}, F_{y2}, F_{y3} in y-Richtung auf die Arme B, C korrespondiert der am frei endenden Arm A angebrachte erste Teil 28 der Spule-Anker- oder Spule-Spule-Kombination mit dem Teil 6 in Fig. 1 und sein Pendant, Teil 29, mit Teil 8 in Fig. 1.

Bei Angriff von Messkräften F_{z1}, F_{z2}, F_{z3} in z-Richtung auf die Arme B, C, oder bei Torsion der Arme B, C zufolge Drehmomentangriffes Mₓ, korrespondieren der am frei endenden Arm A angebrachte erste Teil 28 und sein Pendant 29 der Spule-Anker- oder Spule-Spule-Kombination 28, 29 von Fig. 3 mit der entsprechenden Kombination 15, 16 in Fig. 1.

Die angeführten Messgrößenangriffe folgern jeweils Veränderungen des Luftspaltes 30 und damit einhergehend Veränderungen der magnetischen Kopplung, aus welcher auf die Messgröße rückgeschlossen werden kann.

Im Betrieb bewirkt der Angriff einer Messgröße in Form einer Kraft oder eines Drehmomentes an mindestens einem Arm eine dieser Messgröße folgende gestaltsmäßige oder torsionsmäßige Veränderung mindestens eines Armes (B, C) mit damit einhergehender Auslenkung des frei endenden dritten Armes (A), wobei die magnetische Kopplung zwischen dem am frei endenden dritten Arm (A) angebrachten ersten Teil (28) der zweiteiligen Spule-Anker- oder Spule-Spule-Kombination und dem zweiten Teil (29) eine der Messgröße folgende Veränderung erfährt.

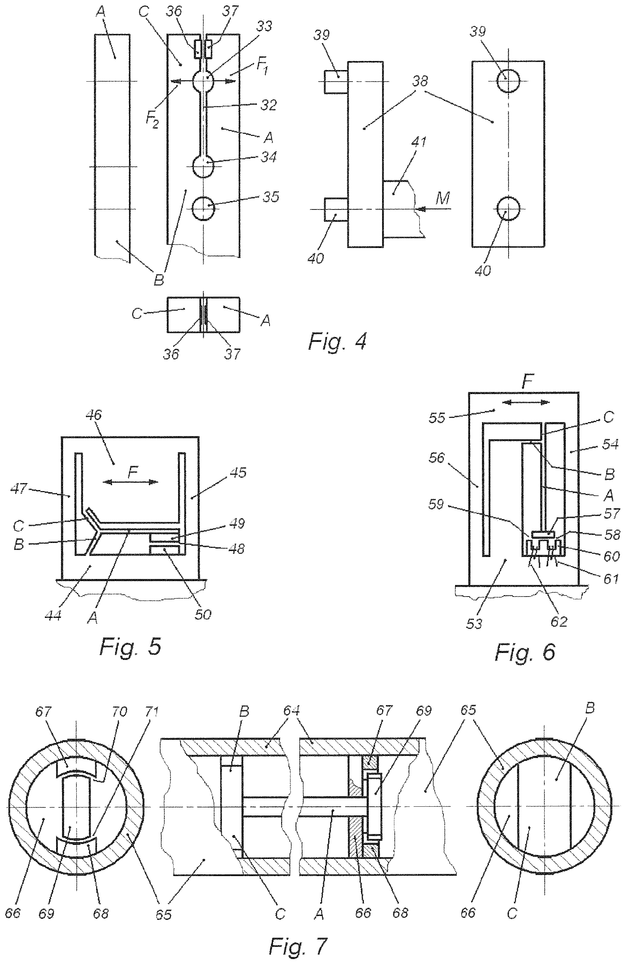

Fig. 4 zeigt unter Bezugnahme auf die Darlegungen in und zu Fig. 1 ein entweder als Kraftsensor oder als Drehmomentsensor nutzbares praxisnahe gestaltetes dreiarmiges Konstruktionselement A, B, C, 36, 37, wenn sein erster Arm B als ortsfest arretiert oder mit einem ein Gegendrehmoment bereitstellenden Trägerkörper gekoppelt angenommen wird.

An jedem der zwei durch einen Schlitz 32 getrennten und wahlweise frei endenden Arme A, B ist je ein Teil 36, 37 einer im Betrieb magnetisch gekoppelten Spule-Anker- oder Spule-Spule-Kombination angebracht, deren magnetische Kopplung durch deren gegenseitigen Abstand bestimmt ist. Jeder dieser Arme A, B ist unter Veränderung der magnetischen Kopplung auslenkbar, was beispielsweise mittels eines kurbelartig gestalteten und ein positives oder negatives Drehmoment M einbringenden kurbelartigen Gegenstandes 38 bis 41 bewerkstelligt werden kann, wenn dessen Zapfen 39, 40 in die hierfür vorgesehenen Ausnehmungen 35, 33, oder 34, 33, eingeführt sind.

Im Betrieb bewirkt ein Messdrehmoment, herbeigeführt durch den Angriff einer in Bezug auf einen Drehpunkt (35) etwa tangential angreifenden Kraftkomponente (F) auf einen der beiden die Teile der Spule-Anker- oder Spule-Spule-Kombination (36, 37) tragenden Arme (A, C) eine Veränderung der gegenseitigen Positionen der zwei Teile und damit einhergehend eine Veränderung ihrer magnetischen Kopplung.

Fig. 5 zeigt ein dreiarmiges Konstruktionselement A, 49, B, C mit je einem Arm B, C in zwei einander gegenüberliegende und gegeneinander etwa parallelverschiebbare Rahmenabschnitte 44, 46 eines parallelogrammartig gestalteten Kraftsensor-Grundkörpers 44 bis 47 fließend übergehend.

Eine durch eine Messkraft F bewirkte Verformung des Grundkörpers folgert eine Auslenkung des frei endenden Armes A und damit einhergehend eine der Messkraft folgende Veränderung der magnetischen Kopplung zwischen dem an ihm angebrachten ersten Teil 49 einer im Betrieb magnetisch gekoppelten zweiteiligen Spule-Anker- oder Spule-Spule-Kombination, und dem zweiten Teil 50, welcher an einem Rahmenabschnitt 44 angebracht sein kann.

Im Betrieb bewirkt eine zumindest näherungsweise Parallelverschiebung zweier Rahmenabschnitte (44, 46; 53, 55) eine dieser Parallelverschiebung folgende Auslenkung des drittes Armes (A) mit damit einhergehender Veränderung der magnetischen Kopplung zwischen dem ersten Teil (49; 57) und dem zweiten Teil (50; 60) der zweiteiligen Spule-Anker- oder Spule-Spule-Kombination.

Fig. 6 zeigt ein dreiarmiges Konstruktionselement A, 57, B, C mit je einem Arm B, C in zwei einander gegenüberliegende und gegeneinander etwa parallelverschiebbare Rahmenabschnitte 53, 55 eines parallelogrammartig gestalteten Kraftsensor-Grundkörpers 53 bis 56 fließend übergehend.

Eine durch eine Messkraft F bewirkte Verformung des Grundkörpers folgert eine Auslenkung des frei endenden Armes A und damit einhergehend zwei der Messkraft folgende Veränderungen der im Betrieb zwei magnetischen Kopplungen zwischen dem an ihm angebrachten ersten Teil 57 und den am E-Kern 60 als dem zweiten Teil angebrachten zwei Spulen 61, 62.

Der erste Teil 57 kann ein ferromagnetischer Anker sein. Dann Verändert seine Auslenkung die Induktivitäten der beiden Spulen gegenläufig. Der erste Teil kann aber auch eine Spule sein, in welcher die im Betrieb von harmonischen Wechselströmen unterschiedlicher Frequenzen durchflossenen zwei Spulen des E-Kernes eine Spannung induzieren, deren spektrale Komponenten auf die Auslenkung des Armes A und damit auf die Messkraft F rückschließen lassen.

Fig. 7 zeigt einen Drehmoment- oder Biegungs- oder Axialkraftsensor mit einem dreiarmigen Konstruktionselement A, B, C, 69, welches im Inneren eines Rohrstückes 65 angebracht ist.

Erster Arm B und zweiter Arm C unterhalten starre Verbindungen mit der Innenwandung des Rohrstückes.

Der frei endende dritte Arm A ist wahlweise in einer seine radiale Position festlegenden Führungsscheibe 66 drehbar und axial verschiebbar aufgenommen. An seinem freien Ende ist der erste Teil 69 einer zweiteiligen und im Betrieb magnetisch gekoppelten Spulen-Anker- oder Spulen-Spulen-Kombination 67, 69 angebracht, deren zweiter Teil 67 starre Verbindung mit dem Rohrstück 64 unterhält. Mit einem dritten Teil 68 ist eine Differenzauswertung möglich.

Bei der Übertragung eines Drehmomentes erfährt das Rohrstück in seinem Längsabschnitt zwischen den an ihm starr angebrachten Armen B, C und der Stelle der Anbringung des zweiten Teiles 67 der Spule-Anker- oder Spule-Spule-Kombination am Rohrstück eine dem Drehmoment folgende Torsion, welche eine Veränderung der magnetischen Kopplung der beiden Teile folgert.

Der gegenständliche Längsabschnitt des Rohrstückes kann vollwandig oder geschlitzt oder käfigartig oder als Metallbalg usw. ausgeführt sein.

Statt frei zu enden kann der dritte Arm A zur Drehmoment-Einleitung und das Rohrstück zur Drehmomentausleitung genützt sein, wobei dann die magnetische Kopplung der installierten Spule-Anker- oder Spule-Spule-Kombination Auskunft über die dem Drehmoment folgende Torsion des dritten Armes A gibt.

Unter Vernachlässigung der Führungsscheibe 66 kann die magnetische Kopplung auch einer das Rohrstück krümmenden Radialbelastung oder einem angreifenden Biegemoment folgen, und aus der Veränderung der magnetischen Kopplung kann auf die Veränderung der Radialbelastung oder Durchbiegung rückgeschlossen werden.

Die magnetische Kopplung kann auch der Längenänderung des Rohrabschnittes zwischen den Befestigungsstellen von erstem und zweitem Arm und der Stelle der Anbringung des zweiten Teiles der Spule-Anker- oder Spule-Spule-Kombination folgen, was einen Zugkraft- oder Druckkraftsensor ergibt.

Im Betrieb bewirkt eine Veränderung der Torsion oder der Gestalt oder der Länge des Rohrstückes (65) in dem Axialabschnitt zwischen den an seiner Innenwandung starr angebrachten zwei Armen (B, C) und der Stelle der starren Verbindung des zweiten Teiles (67) der Spule-Anker- oder Spule-Spule-Kombination mit dem Rohrstück eine dieser mechanischen Veränderung folgende Veränderung der magnetischen Kopplung zwischen den beiden Teilen der Spule-Anker- oder der Spule-Spule-Kombination.

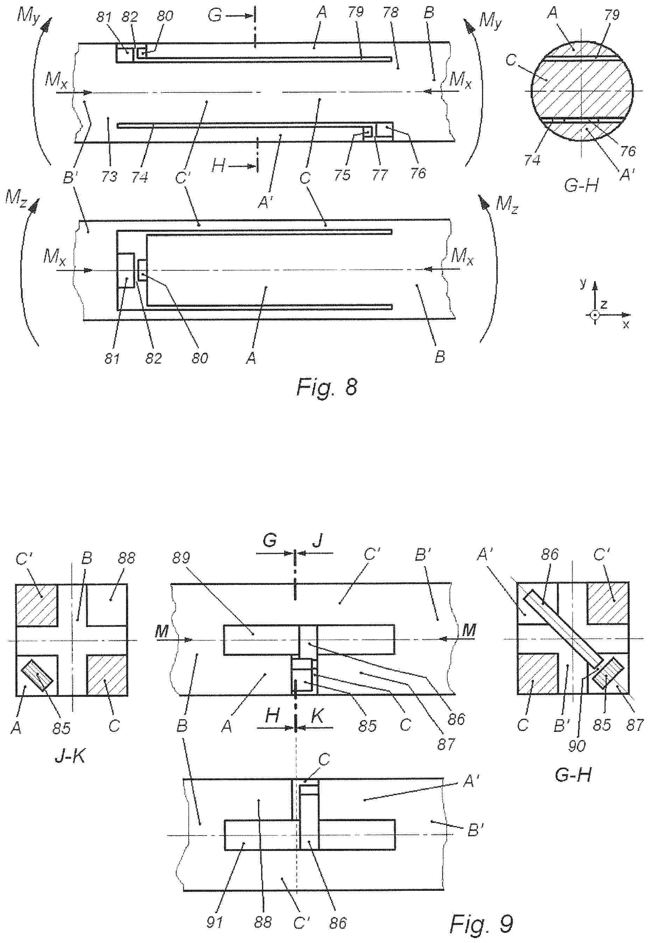

Fig. 8 zeigt mit zwei dreiarmigen Konstruktionselementen A, 80, B, C bzw. A', 75, B', C', deren jeweils erste Arme C, C' mit ihren Enden mit zusammenfallenden Längsachsen fließend ineinander übergehen und deren Längsachsen auch mit den Längsachsen der in entgegengesetzte Richtungen abstehenden jeweiligen zweiten Arme B, B' zusammenfallen.

Die von den jeweiligen gemeinsamen Wurzelbereichen 78 bzw. 73 der beiden dreiarmigen Konstruktionselemente abstehenden dritten Arme A, A' enden frei, und an ihnen ist jeweils ein Teil einer ihnen individuell zugeordneten und im Betrieb magnetisch gekoppelten Spule-Anker oder Spule-Spule-Kombination angebracht, deren jeweilige zweite Teile 81 bzw. 76 jeweils etwa im Wurzelbereich des anderen Konstruktionselementes angebracht sind.

Diese redundante, oder aber eine differentielle Erfassung ermöglichende Gestaltungsvariante folgert bei Veränderung der Gestalt oder der Torsion der beiden ineinander übergehenden jeweiligen ersten Arme C, C' zufolge Veränderung des Drehmomentes Mₓ oder zufolge Veränderung mindestens eines der Biegemomente My oder M_{z} Veränderungen in den individuellen magnetischen Kopplungen der beiden installierten Spule-Anker- oder Spule-Spule-Kombinationen.

Veränderungen in den magnetischen Kopplungen können auch aus Axialkraft- bzw. Längenveränderungen resultieren.

Im Betrieb bewirkt eine Veränderung der Gestalt oder der Torsion oder der axialen Länge der beiden fließend ineinander übergehenden Arme (C; C') und zugleich Federkörper eine Veränderung der magnetischen Kopplung der einen Spule-Anker- oder Spule-Spule-Kombination (80, 81) oder eine Veränderung der magnetischen Kopplung der anderen Spule-Anker- oder Spule-Spule-Kombination (75, 76).

Fig. 9 zeigt eine Kombination zweier etwa gleichartiger dreiarmiger Konstruktionselemente A, B, C, 85 bzw. A', B', C', 86 zu einem Drehmomentsensor.

Die zwei ungleich langen Arme A, C des ersten Konstruktionselementes A, 85, B, C stehen von ihrem gemeinsamen Wurzelbereich in Richtung des Wurzelbereiches des zweiten Konstruktionselementes A', 86, B', C' ab, wobei der längere Arm C in den Wurzelbereich des zweiten Konstruktionselementes fließend übergeht und der kürzere Arm A vorher endet.

Am kürzeren Arm ist der erste Teil 85 einer im Betrieb magnetisch gekoppelten zweiteiligen Spule-Anker- oder Spule-Spule-Kombination angebracht.

Die zwei ungleich langen Arme A', C' des zweiten Konstruktionselementes A', 86, B', C' stehen von ihrem gemeinsamen Wurzelbereich in Richtung des Wurzelbereiches des ersten Konstruktionselementes A, 85, B, C ab, wobei der längere Arm C' in den Wurzelbereich des ersten Konstruktionselementes fließend übergeht und der kürzere Arm A' vorher endet. Am kürzeren Arm ist der zweite Teil 86 der im Betrieb magnetisch gekoppelten zweiteiligen Spule-Anker- oder Spule-Spule-Kombination angebracht.

Die Längsachsen der jeweiligen dritten und in Bezug auf die jeweiligen ungleich langen Arme A, C bzw. A', C' jeweils in entgegengesetzte Richtungen abstehenden dritten Arme B, B' fallen zusammen.

Im Sinne aufwandsärmerer Fertigung können von den Wurzelbereichen abstehende funktionslose Butzen 87, 88 belassen sein.

Bei der Übertragung eines Drehmomentes zwischen den axial äußeren Armen B, B' erfahren die beiden die mechanische Verbindung zwischen den zwei Konstruktionselementen unterhaltenden längeren Arme C, C' eine in Richtung Verdrillung tendierende Verformung bei gleichzeitiger Veränderung der gegenseitigen Positionen der kürzeren Arme A, A', womit eine dem Drehmoment folgende Veränderung der magnetischen Kopplung der beiden Teile 85, 86 der Spule-Anker- oder Spule-Spule-Kombination einhergeht.

Die Gestalten der längeren Arme C, C' können, beispielsweise um radialen oder axialen oder winkelmäßigen Versatz der axial äußeren Arme B, B' tolerieren zu können, von der in Fig. 9 gezeichneten Geradlinigkeit abweichen.

Im Betrieb bewirkt die Übertragung eines Drehmomentes (M) vom einen einzeln abstehenden Arm (B) zum anderen einzeln abstehenden Arm (B') eine in Richtung Verdrillung tendierende Gestaltsveränderung der längeren zwei Arme (C; C'), welche die zwei Konstruktionselemente mechanisch verbinden, wobei mit dieser Gestaltsveränderung eine Veränderung der gegenseitigen Positionen der frei endenden kürzeren Arme und damit eine dem Drehmoment folgende Veränderung der magnetischen Kopplung der an ihnen angebrachten Teile (85; 86) der Spule-Anker- oder der Spule-Spule-Kombination einhergeht.

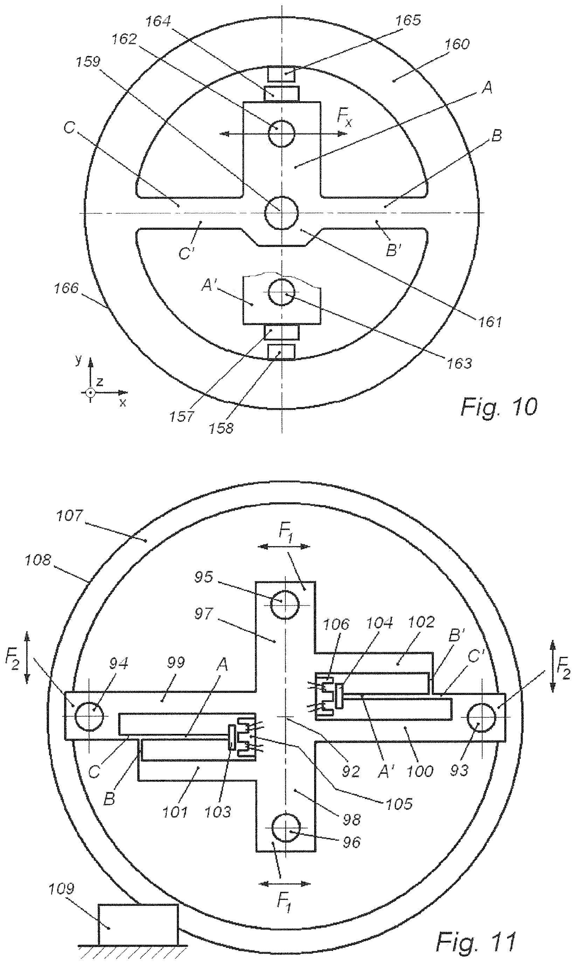

Fig. 10 zeigt einen Kraftsensor oder Drehmomentsensor in Form eines dreiarmigen Konstruktionselementes A, B, C, 164 welches mit den Enden zweier Arme B, C etwa geradliniger Anordnung in einen verformungssteifen Kranz 160 übergeht.

Am frei endenden dritten Arm A ist der erste Teil 164 einer im Betrieb magnetisch gekoppelten zweiteiligen Spule-Anker- oder Spule-Spule-Kombination angebracht, deren zweiter Teil 165 am Kranz angebracht ist.

Die beiden Arme B, C fungieren im Betrieb als Federkörper, wenn bei als fixiert angenommenem Kranz in ihrem Wurzelbereich 161 eine axiale Kraft (in z-Richtung) oder ein Drehmoment angreift.

Die Erzeugung eines Drehmomentes kann auch ähnlich wie in Fig. 4 mit einer kurbelartigen Einrichtung 38 bis 41 durch Angriff einer auf das Zentrum 159 bezogenen Tangentialkraft Fₓ erfolgen.

Aus Gründen der Unwuchtigkeit einer im Betrieb rotierenden unsymmetrischen Ausführungsvariante mit lediglich einem dreiarmigen Konstruktionselement A, B, C, 164 kann eine spiegelsymmetrische Ausführung mit zwei zueinander parallelen und entlang der in der graphischen Darstellung horizontalen Symmetrieachse zusammengefügten dreiarmigen Konstruktionselementen A, B, C, 164 und A', B', C', 157 treten, wobei sich dann eine an zweitem frei endendem Arm A' und am Kranz angebrachte zweite zweiteilige Spule-Anker- oder Spule-Spule-Kombination 157, 158 für eine differentielle Auswertung nützen lässt.

In Bezug auf den als ortsfest angenommenen Kranz folgert der Angriff einer axialen Kraft oder eines Drehmomentes im Wurzelbereich 161 eine der Messgröße folgende Auslenkung des ersten Teiles 164 der im Betrieb magnetisch gekoppelten zweiteiligen Spule-Anker- oder Spule-Spule-Kombination gegenüber deren zweitem Teil 165, womit eine der Messgröße folgende Veränderung der magnetischen Kopplung einhergeht.

Im Saumbereich des Kranzes 160 oder an dessen Mantel 166 kann zwecks betrieblicher Erfassung seiner Winkelposition eine binäre serielle Codierung angebracht sein.

Im Betrieb kann der Angriff einer Messkraft oder eines Messkraftpaares im Wurzelbereich oder am frei endenden Arm (A) in Bezug auf den Kranz ein Drehmoment erzeugen, wobei eine der Messkraft oder dem Messkraftpaar folgende Auslenkung des frei endenden Armes eine Veränderung der magnetischen Kopplung der zwei Teile (164, 165) der zweiteiligen Spule-Anker- oder Spule-Spule-Kombination bewirkt.

Fig. 11 zeigt eine redundante doppelte und zur differentiellen Auswertung geeignete, Integration zweier dreiarmiger Konstruktionselemente A, B, C, 103 bzw. A', B', C', 104 in einen übergeordneten Trägerkörper 97 bis 102. Diese zentralsymmetrische Gesamtkonstruktion ist als Drehmomentsensor nützbar.

Die jeweiligen ersten Arme B, B' der beiden Konstruktionselemente unterhalten individuell starre Verbindungen mit den von den ersten beiden von einem Balken 97, 98 etwa normal abstehenden kraftfreien Armen 101, 102.

Unter der Annahme starrer Arretierung des Balkens 97, 98, was beispielsweise mittels ortsfester Zapfen in den Bohrungen 95, 96 erreicht sein kann, folgern in den Bohrungen 93, 94 der zweiten zwei vom Balken abstehenden Arme 99, 100 angreifende tangentiale Kräfte F₂, F₂ diesen Kräften folgende Krümmungen der zweiten Arme 99, 100 mit Auslenkungen ihrer zentrumsfernen Endabschnitte, wobei diese Auslenkungen auf die in sie jeweils fließend übergehenden Arme C bzw. C' der Konstruktionselemente übertragen werden. In Analogie zu dem zu Fig. 6 Dargelegten erfolgen dabei Veränderungen der magnetischen Kopplungen bzw. Veränderungen der Induktivitäten der an den E-Kernen 105, 106 angebrachten Spulen.

Diese Einrichtung ist ein differentiell erfassender Drehmomentsensor für einander entgegengesetzte Drehmomente zufolge der Kräftepaare F₁, F₁, F₂, F₂.

Im Bereich der radialen Enden von Balken 97, 98 oder Armen 99, 100 kann ein mit dem Drehmomentsensor koaxialer Kranz 107 mit in seinem Saumbereich oder an seinem Mantel 108 angebrachter binärer serieller Codierung angebracht sein, aus welcher im Betrieb mittels einer stationären Leseeinrichtung 109 seine aktuelle Winkelposition ermittelt werden kann.

Im Betrieb fungiert der auf der einen Seite des Balkens abstehende erste Arm (99) bei an ihm etwa tangential angreifender Kraft (F₂) als Federkörper und erfährt eine der Kraft folgende Krümmung, wobei in Bezug auf das Symmetriezentrum (92) sowohl am Balken (97, 98) als auch an den als Federkörper fungierenden Armen (99, 100) angreifende tangentiale Kräftepaare (F₁, F₁; F₂, F₂) Auslenkungen der frei endenden Arme (A; A') der beiden Konstruktionselemente und damit einhergehend Veränderungen der magnetischen Kopplungen der jeweiligen zwei Teile der jeweiligen Spule-Anker- oder Spule-Spule-Kombinationen bewirken.

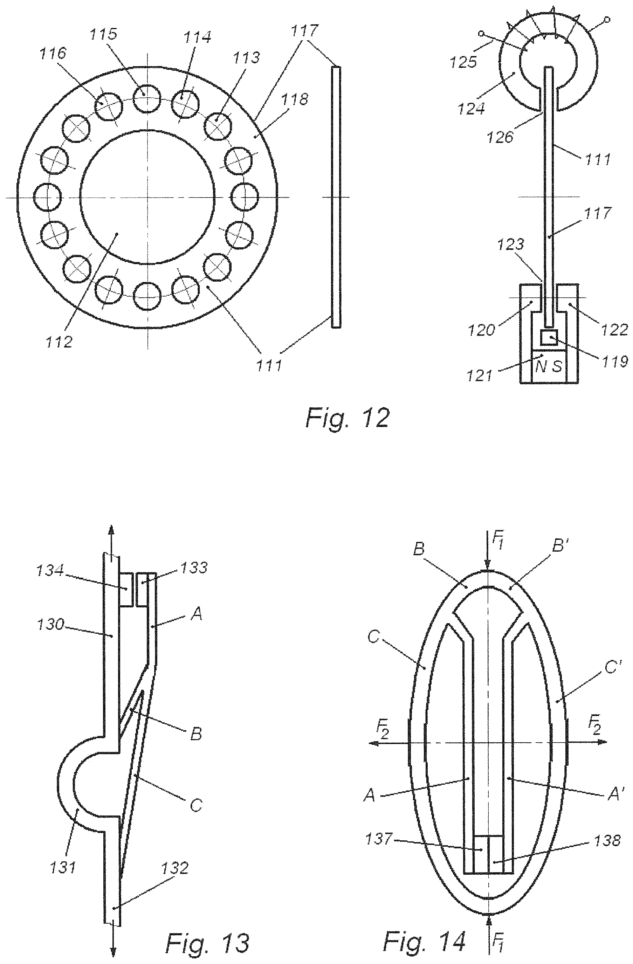

Fig. 12 zeigt eine etwa kreisringförmige Leiterplatte 111 zur drahtlosen Übertragung von elektrischer Energie und von Datensignalen zwischen einer stationären Baugruppe und einer Elektronik, welche an der im Betrieb rotierenden Scheibe 120 bis 126 oder an dem Trägerkörper, an welchem sie angebracht ist, angebracht sein kann.

Die Scheibe kann mit ihrem zentralen Freiraum 112 an einer im Betrieb rotierenden Welle angebracht sein, oder aber ähnlich dem Kranz 107 in Fig. 11 in ihrem zentralen Freiraum 112 einen Drehmomentsensor gemäß Fig. 3 oder 4 oder 8 bis 11 aufgenommen haben.

Die Leiterplatte 111 weist entlang eines konzentrischen Kreises 127 mehrere Durchbrüche oder Bohrungen auf, in welchen ferromagnetische Teile 113, 114, 115 usw. und um diese herum in der Scheibe oder auf deren Oberfläche Wicklungen angebracht sind.

Im Saumbereich 118 oder am Mantel 117 der Leiterplatte 111 kann eine absolutwertige binäre serielle Codierung angebracht sein, welche mittels einer entsprechenden Leseeinrichtung 119 ihre Winkelposition feststellen lässt.

Bei schneller Bewegung der ferromagnetischen Teile durch einen Luftspalt 123 eines etwa C-förmigen Magnetsystems 120, 121, 122 kann auf die Scheibe Energie übertragen werden. Bei hierfür zu langsam drehender Scheibe können Energiezufuhr und Signalübertragung über einen bespulten geschlitzten Ringkern 124, 125, 126 erfolgen.

Im Empfangsbetrieb bewirken die mittels einer externen Einrichtung in die ferromagnetischen Kerne eingebrachten magnetischen Flussänderungen in den die Kerne umgebenden Wicklungen Induktionsspannungen und im Sendebetrieb bewirkt ein seitens der rotierenden Baugruppe in mindestens eine der Wicklungen eingebrachter zeitlich variierender elektrischer Strom in der Umgebung mindestens eines zugeordneten Kernes ein diesem Strom zeitlich folgendes Magnetfeld.

Fig. 13 zeigt einen Verformungssensor mit einem dreiarmigen Konstruktionselement A, B, C, 133, welches mit zwei von ihrem Wurzelbereich unter Aufspannung eines spitzen Winkels abstehenden Armen B, C unter schiefen Winkeln am Kraftsensor-Grundkörper 130, 131, 132 starr angebracht ist, wobei zwischen diesen beiden Stellen ihrer Anbringung ein Federkörperabschnitt 131 liegt.
Eine Federkörperverformung folgert eine Auslenkung des frei endenden Armes A und damit einhergehend eine Veränderung der magnetischen Kopplung zwischen dem an diesem Arm A angebrachten ersten Teil 133 der zweiteiligen Spule-Anker- oder Spule-Spule-Kombination und dem anderswo angebrachten zweiten Teil 134.

Im Betrieb bewirkt die Verformung des Federkörperabschnittes eine ihr folgende Auslenkung des frei endenden Armes und damit einhergehend auch eine ihr folgende Veränderung der magnetischen Kopplung der zwei Teile (133, 134) der Spule-Anker- oder Spule-Spule-Kombination. Fig. 14 zeigt eine spiegelsymmetrische Zusammenfügung zweier dreiarmiger Konstruktionselemente A, 137, B, C und A', 138, B', C' zu einem oval profilierten Kraftsensor oder Drucksensor.

Die wahlweise nach innen oder außen abstehenden und jeweils frei endenden ersten Arme A, A' erfahren bei Kraftangriff F₁, F₁; F₂, F₂ auf die fließend in ihr jeweiliges spiegelsymmetrisches, oder aber zentralsymmetrisches, Pendant übergehenden zweiten und dritten Arme B, C; B', C' einander entgegengesetzte Auslenkungen und damit einhergehend die magnetische Kopplung der zweiteiligen Spule-Anker- oder Spule-Spule-Kombination 137, 138, deren je ein Teil an einem frei endenden Arm angebracht ist, eine Veränderung.

Bei einem Rohr mit dem in Fig. 14 gezeichneten ovalen Profil als Querschnitt tendiert der Querschnitt in Richtung Kreisform, wenn der Innendruck des Rohres gegenüber dem Außendruck ansteigt, was diese Konstruktion zu einem Druckdifferenzsensor macht.

Im Betrieb bewirkt die Veränderung von an dem Gesamtkörper angreifenden Kräften (F₁, F₁; F₂, F₂), welche auch aus einer Veränderung der Druckdifferenz zwischen innen und außen der oval profilierten Gestalt herrühren können, dessen Verformung und damit einhergehend Auslenkungen der frei endenden Arme mit daraus resultierender Veränderung der magnetischen Kopplung der zwei Teile (137, 138) der zweiteiligen Spule-Anker- oder Spule-Spule-Kombination.

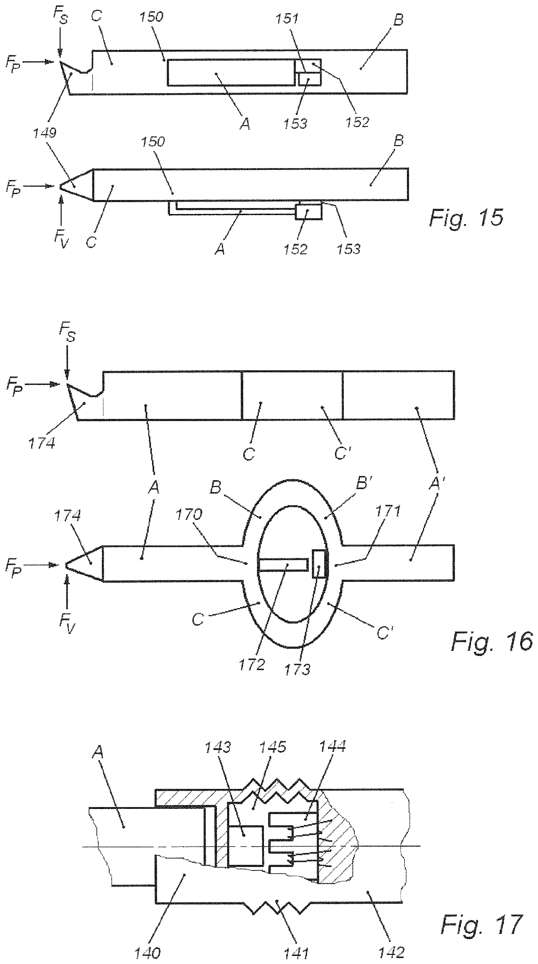

Fig. 15 zeigt eine Gestaltungsvariante eines dreiarmigen Konstruktionselementes A, B, C, 151 als einen im Betrieb die Schnittkraft FS oder die Vorschubkraft FV erfassenden Drehmeißel.

Alle drei vom gemeinsamen Wurzelbereich 150 abstehenden Arme A, B, C enden frei. Der zu einer Schneide 149 ausgebildete oder eine Schneiplatte tragende oder anders gestaltete erste Arm C steht vom Wurzelbereich in entgegengesetzter Richtung zum zweiten Arm B ab, dessen Endabschnitt der Einspannung und Fixierung im Werkzeughalter dient. Diese beiden mit zusammenfallenden Längsachsen angeordneten Arme B, C bilden den sogenannten Schafft.

Der im Betrieb auskragende Schaftabschnitt des Drehmeißels erfährt zufolge Schnittkraft FS oder zufolge Vorschubkraft FV eine Biegung bei gleichzeitiger Auslenkung des kraftfreien frei endenden dritten Armes A, womit eine der Messgröße folgende Veränderung der magnetischen Kopplung zwischen dem am dritten Arm angebrachten ersten Teil 151 und dem am Schaft angebrachten zweiten Teil 153 der mindestens zweiteiligen Spule-Anker- oder Spule-Spule-Kombination einhergeht.

Im Betrieb bewirken die Angriffe von Schnittkraft und Vorschubkraft an Schneidplatte oder Schneide (149) oder anders gestaltetem Krafteinleitungsbereich zwei zueinander orthogonale Biegungen mit zwei zueinander orthogonalen Auslenkungskomponenten des frei endenden dritten Armes (A) und damit einhergehend eine Veränderung der magnetischen Kopplung zwischen den Teilen der mindestens zweiteiligen Spule-Anker- oder Spule-Spule-Kombination.

Fig. 16 zeigt eine Kombination zweier dreiarmiger Konstruktionselemente A, B, C; A', B', C' zu einem Kräfte in drei Raumrichtungen erfassenden Drehmeißel oder zu einem ganz allgemeinen Kraftsensor.

Jeweils zwei Arme B, C; B', C', die im Betrieb als Federkörper fungieren, stehen von ihren Wurzelbereichen 170, 171 in entgegengesetzte Richtungen und gleichzeitig etwa normal auf den jeweiligen frei endenden dritten Arm A; A' ab und sind in ihren weiteren Verläufen jeweils zu einer C-ähnlichen Gestalt geformt.

Die Enden der einen C-ähnlichen Gestalt gehen individuell fließend in die Enden der anderen C-ähnlichen Gestalt über, wobei die Längsachsen der beiden frei endenden Arme A, A' zusammenfallen und alle Arme in einer Ebene liegen.

Je ein Teil 172, 173 einer im Betrieb magnetisch gekoppelten zweiteiligen Spulen-Anker- oder Spulen-Spulen-Kombination unterhält mit je einem Wurzelbereich 170, 171 starre Verbindung. Jedwede Positionsveränderung des einen frei endenden Armes A gegenüber dem anderen frei endenden Arm A' folgert eine auswertbare Veränderung der magnetischen Kopplung der zweiteiligen Spulen-Anker- oder Spulen- Spulen-Kombination 171, 172.

Im Betrieb bewirkt eine Positionsveränderung des ersten Armes des ersten Konstruktionselementes gegenüber dem ersten Arm des zweiten Konstruktionselementes eine Veränderung der magnetischen Kopplung der Spulen-Anker- oder Spulen-Spulen-Kombination.

Fig. 17 zeigt einen in drei aufeinanderfolgende Abschnitte 141, 142, 143 gegliederten Verschmutzungs-Schutzkörper, deren erster als Ankopplungsabschnitt 141 seiner fixen Anbringung an dem einer Messgröße folgend auslenkenden und frei endenden Arm A oder A' eines erfindungsgegenständlichen Kraft- oder Drehmomentsensors dient, deren dritter als Montageabschnitt 142 seiner eigenen Befestigung dient, und der Ankopplungsabschnitt mit Befestigungsabschnitt flexibel verbindende zweite Abschnitt 142, beispielsweise balgartig gestaltet, einen vor Verschmutzung geschützten Hohlraum 145 aufweist.

Im Hohlraum ist der erste Teil 143 einer im Betrieb magnetisch gekoppelten zweiteiligen Spule-Anker- oder Spule-Spule-Kombination am Ankopplungsabschnitt und der zweite Teil 144 am Montageabschnitt angebracht.

Bei als ortsfest angenommenem Montageabschnitt 142 vermag der im Betrieb einer Messgröße folgend auslenkende Arm A den - ihm beispielsweise übergestülpten - Ankopplungsabschnitt 140 auszulenken, wobei die magnetische Kopplung zwischen erstem und zweitem Teil der Spule-Anker- oder Spule-Spule-Kombination eine Veränderung erfährt.

Im Betrieb bewirkt die Auslenkung des Ankopplungsabschnittes gegenüber dem Montageabschnitt eine Auslenkung des ersten Teiles der magnetisch gekoppelten zweiteiligen Spule-Anker- oder Spule- Spule-Kombination gegenüber deren zweitem Teil und eine damit einhergehende Veränderung der magnetischen Kopplung der beiden Teile.

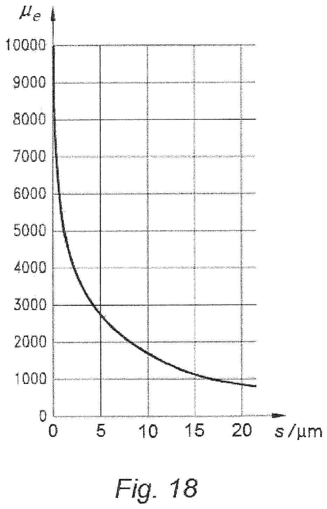

Fig. 18 zeigt am Beispiel einer Kennlinie eines Ferrit-Kernsatzes RM4, Ausführungsvariante "ohne Luftspalt", [nach IEC 62317-4 Standard], die mit erfindungsgegenständlichen zweiteiligen Spule-Anker-Kombinationen ausnützbare enorme Abhängigkeit der effektiven Permeabilität µₑ von der Luftspaltlänge s zwischen den beiden Kernhälften. Eine mit der einen Kernhälfte ausgestattete Spule, deren Induktivität µₑ folgt, und die zweite Kernhälfte als Anker verwendet, lässt etwa der Kennlinie µₑ / s folgende Sensorkörper-Gestaltänderungsempfindlichkeiten erreichen.

## Patentansprüche

1. Konstruktionselement zur Erfassung einer einer Messgröße folgenden und auf sie rückschließen lassenden Gestaltsveränderung oder Torsionsveränderung des Konstrukti-onselements, **dadurch gekennzeichnet, dass** das Konstruktionselement einen mechanischen Teil aufweist, der aus drei von einem gemeinsamen Zentrum oder Wurzelbereich (21) ausgehenden Armen (A, B, C) gebildet ist, wobei mindestens ein erster Arm (B) und/oder ein zweiter Arm (C) entweder an dem Trägerkörper (1) starr angebracht oder in diesen Trägerkörper integriert ist, wobei an einem dritten Arm (A) der erste Teil (2, 6, 10, 15, 27, 28, 37, 49, 57, 69, 75, 80, 85 103, 104, 133, 152, 164) und an einem anderen Arm (B, C) oder an einem anderen Trägerkörper (1) der zweite Teil (4, 7, 26, 29, 36, 50, 60, 67, 68, 81, 165, 105, 106, 134, 153) einer zweiteiligen Spule-Anker- oder Spule-Spule-Kombination angebracht ist, wobei im Betrieb der erste Teil in einem magnetischen Wechselfeld des zweiten Teils liegt, wobei der Angriff der Messgröße in Form einer Kraft oder eines Drehmomentes an mindestens dem ersten Arm (B) und/oder dem zweiten Arm (C) eine dieser Messgröße folgende gestaltsmäßige oder torsionsmäßige Veränderung mindestens dieses ersten Arms (B) und/oder zweiten Arms (C) mit damit einhergehender Auslenkung des frei endenden dritten Armes (A) bewirkt, wobei die magnetische Kopplung zwischen dem am frei endenden dritten Arm (A) angebrachten ersten Teil der zweiteiligen Spule-Anker- oder Spule-Spule-Kombination und dem zweiten Teil eine der Messgröße folgende Veränderung erfährt, und wobei die Veränderung der magnetischen Kopplung einen Rückschluss auf die Auslenkung des dritten Armes (A) und damit auf die Messgröße ermöglicht.

2. Konstruktionselement nach Anspruch 1, **dadurch gekennzeichnet, dass** zur Kraft- oder Drehmoment- oder Biegungserfassung in einem mechanischen System seiner Umgebung zumindest der erste Arm (C) an einen Körper (31) der Umgebung mechanisch ankoppelbar ausgeführt oder angekoppelt ist, der vom gemeinsamen Wurzelbereich etwa in entgegengesetzter Richtung zum ersten Arm abstehende zweite Arm (B) entweder mit einer anderen Stelle des selben Körpers (31) oder mit einem anderen Körper (32) mechanisch gekoppelt ist, und am frei endenden dritten Arm (A), welcher bei hohlem erstem Arm (B) oder hohlem zweitem Arm (C) gegebenenfalls auch innen angebracht ist, der erste Teil (28) einer im Betrieb magnetisch gekoppelten Spule-Anker- oder Spule-Spule-Kombination angebracht ist, und deren zweiter Teil (29) an einem der anderen Arme oder am Trägerkörper (1) angebracht ist, wobei im Betrieb der Anker bzw. die zweite Spule im magnetischen Wechselfeld der ersten Spule liegt.

3. Konstruktionselement nach Anspruch 1, **dadurch gekennzeichnet, dass** ein Grundkörper (44 bis 47; 53 bis 56) mit zwei einander gegenüberliegenden und als Federkörper einer Parallelführung fungierenden Rahmenabschnitten (45, 47; 54, 56) und mit zwei anderen einander gegenüberliegenden und gegeneinander etwa parallel verschiebbaren Rahmenabschnitten (44, 46; 53, 55) parallelogrammartig gestaltet ist, das Ende des ersten Armes (C) am einen Rahmenabschnitt (46; 55) der beiden parallelverschiebbaren Rahmenabschnitte (44, 46; 53, 55) starr angebracht ist, und das Ende des zweiten Armes (B) an einem anderen Rahmenabschnitt (44; 53) starr angebracht ist.

4. Konstruktionselement nach Anspruch 1, **dadurch gekennzeichnet, dass** die vom gemeinsamen Wurzelbereich etwa in entgegengesetzte Richtungen abstehenden zwei Arme (B, C) mit ihren Enden an der Innenwandung eines Rohrstückes (65) starr angebracht sind, der frei endende dritte Arm (A) über einen axialen Teilabschnitt hinweg etwa achsparallel zum Rohrstück (65) vom gemeinsamen Wurzelbereich absteht.

5. Konstruktionselement nach Anspruch 1, **dadurch gekennzeichnet, dass** zwei dreiarmige Konstruktionselemente kombiniert sind, wobei jeweils zwei Arme (B, C; B', C') der jeweils drei von gemeinsamen Wurzelbereichen (78; 73) abstehenden Arme (A, B, C; A', B', C') mit etwa zusammenfallenden Längsachsen in entgegengesetzte Richtungen abstehen, einer dieser Arme (C) des einen Konstruktionselementes (A, 80, B, C) mit zusammenfallenden Längsachsen in einen Arm (C') des anderen Konstruktionselementes (A', 75, B', C') fließend übergeht, und diese Kombination im Betrieb als Federkörper fungiert.

6. Konstruktionselement nach Anspruch 5, **dadurch gekennzeichnet, dass** bei Einsatz einer zweiten im Betrieb magnetisch gekoppelten zweiteiligen Spule-Anker- oder Spule-Spule-Kombination (75, 76) ihr erster Teil (75) am anderen frei endenden Arm (A') angebracht ist.

7. Konstruktionselement nach Anspruch 1, **dadurch gekennzeichnet, dass** zwei dreiarmige Konstruktionselemente zu einem Drehmomentsensor kombiniert sind, wobei zwei ungleich lange Arme (A, C) des ersten Konstruktionselementes (A, 85, B, C) von ihrem gemeinsamen Wurzelbereich etwa in Richtung des Wurzelbereiches des zweiten dreiarmigen Konstruktionselementes (A', 86, B', C') abstehen, der dritte Arm (B) etwa in die entgegengesetzte Richtung absteht, zwei ungleich lange Arme (A', C') des zweiten Konstruktionselementes (A', 86, B', C') von ihrem gemeinsamen Wurzelbereich etwa in Richtung des Wurzelbereiches des ersten dreiarmigen Konstruktionselementes (A, 85, B, C) abstehen, der dritte Arm (B') etwa in die entgegengesetzte Richtung absteht und seine Längsachse mit der Längsachse des dritten Armes (B) des ersten dreiarmigen Konstruktionselementes zusammenfällt, die beiden Konstruktionselemente jeweils mit ihren längeren Armen (C; C') der ungleich langen Arme (A, C; A', C') in den Wurzelbereich des jeweils anderen Konstruktionselementes fließend übergehen, und ihre kürzeren Arme (A; A') unter geeignetem Axialabstand zum jeweiligen Gegenüber (87; 88) frei enden.

8. Konstruktionselemente nach Anspruch 1, **dadurch gekennzeichnet, dass** die Längsachse des ersten vom gemeinsamen Wurzelbereich (161) abstehenden und frei endenden Armes (A) mit einem Hauptdurchmesser des das dreiarmige Konstruktionselement (A, B, C, 164) umgebenden verformungssteifen ebenen Kranzes (160) zusammenfällt, in Bezug auf diesen Hauptdurchmesser der zweite Arm (B) und der dritte Arm (C), welche beide im Betrieb als Federkörper fungieren, zueinander spiegelbildlich vom gemeinsamen Wurzelbereich abstehen, und mit ihren Enden fließend in den Kranz übergehen.

9. Konstruktionselement nach Anspruch 8, **dadurch gekennzeichnet, dass** im gemeinsamen Wurzelbereich (161) gleichartig gestaltete weitere dreiarmige Konstruktionselemente (A', B', C', 157) angebracht sind.

10. Konstruktionselement nach Anspruch 1, **dadurch gekennzeichnet, dass** für einen Drehmomentsensor zwei Konstruktionselemente kombiniert sind, wobei ein etwa ebener und in Bezug auf ein Zentrum (92) zentralsymmetrischer Grundkörper aus einem biegesteifen Balken (97, 98) mit an seinen beiden Längsseiten je zwei etwa normal auf ihn abstehenden Armen (99, 101; 100, 102) besteht, der erste Arm (C) des auf der selben Seite des Balkens (97, 98) angebrachten ersten Konstruktionselementes (A, B, C, 103) fließend in den zentrumsfernen Bereich des ersten Armes (99), zugleich Federkörper, des Grundkörpers übergeht, der zweite Arm (B) des selben ersten Konstruktionselementes fließend in den zentrumsfernen Bereich des zweiten vom Balken abstehenden Armes (101) übergeht, am zentrumsnahe frei endenden dritten Arm (A) des ersten Konstruktionselementes der erste Teil (103) einer im Betrieb magnetisch gekoppelten zweiteiligen Spule-Anker- oder Spule-Spule-Kombination angebracht ist und ihr zweiter Teil (105) eine starre Verbindung mit dem Balken (97, 98) unterhält, wobei im Betrieb der Anker bzw. die zweite Spule im magnetischen Wechselfeld der ersten Spule liegt.

11. Konstruktionselement nach Anspruch 10, **dadurch gekennzeichnet, dass** auf der anderen Seite des Balkens eine zentralsymmetrisch analoge Anordnung mit dem zweiten dreiarmigen Konstruktionselement (A', 104, B', C') vorliegt, im Zentrumsbereich der zentralsymmetrischen Anordnung gegebenenfalls eine Ausnehmung vorliegt oder ein axial ausgerichteter Betätigungszapfen angebracht ist, und der zentralsymmetrische Aufbau gegebenenfalls von einem mit dem Grundkörper (97 bis 100) koaxialen und mit dem Grundkörper eine starre Verbindung unterhaltenden Kranz (107) mit binärer serieller Codierung an seinem Mantel (108) oder in seinem Saumbereich umgeben ist.

12. Konstruktionselement nach Anspruch 1, **dadurch gekennzeichnet, dass** die Enden des ersten Arms (B) und des zweiten Arms (C) an zwei verschiedenen Stellen eines Kraftsensor-Grundkörpers (130, 131, 132) starr angebracht sind, wobei zwischen diesen Stellen ihrer Anbringung ein Federkörperabschnitt (131) liegt.

13. Konstruktionselement nach Anspruch 1, **dadurch gekennzeichnet, dass** zwei dreiarmige Konstruktionselemente zu einem Kraftsensor oder Druckdifferenzsensor kombiniert sind, wobei ein erster Arm (B) und ein zweiter Arm (C) des ersten dreiarmigen Konstruktionselementes (A, 137, B, C) von ihrem gemeinsamen Wurzelbereich etwa in entgegengesetzte Richtungen abstehen und gemeinsam eine etwa C-förmige Gestalt bilden, am frei endenden dritten Arm (A) der erste Teil (137) einer zweiteiligen und im Betrieb eine magnetische Kopplung unterhaltenden Spule-Anker- oder Spule-Spule-Kombination (137, 138) angebracht ist, die Enden von erstem Arm (B) und zweitem Arm (C) des ersten Konstruktionselementes individuell fließend in das zum ersten Konstruktionselement spieglsymmetrische oder zentralsymmetrische zweite dreiarmige Konstruktionselement (A', 138, B',C') übergehen, an dessen frei endendem dritten Arm (A') der zweite Teil (138) der zweiteiligen Spule-Anker- oder Spule-Spule-Kombination angebracht ist, wobei im Betrieb der Anker bzw. die zweite Spule im magnetischen Wechselfeld der ersten Spule liegt.

14. Konstruktionselement nach Anspruch 1, **dadurch gekennzeichnet, dass** an einem Drehmeißel zur Erfassung zweier orthogonaler Kraftkomponenten der erste Arm (C) und der zweite Arm (B) mit zusammenfallenden Längsachsen in einander entgegengesetzte Richtungen vom gemeinsamen Wurzelbereich (150) abstehen und den sogenannten Schaft des Drehmeißels bilden, am freien Ende des ersten Armes (C) entweder eine Schneidplatte angebracht oder dieses Ende zu einer Schneide (149) oder zu einem anders gestalteten Krafteinleitungsbereich ausgebildet ist, der im Betrieb mit seinem Endabschnitt in einer Werkzeughalterung fixierte zweite Arm (B) frei endet, am frei endenden dritten Arm (A) der erste Teil (152) der im Betrieb magnetisch gekoppelten mindestens zweiteiligen Spule-Anker- oder Spule-Spule-Kombination (152, 153) angebracht ist, deren zweiter Teil (153) am Schaft (B, C) angebracht ist.

15. Konstruktionselement nach Anspruch 14, **dadurch gekennzeichnet, dass** zur getrennten Erfassung von Schnittkraft (FS) und Vorschubkraft (FV) am Schaft ein zweiter frei endender Arm mit an ihm angebrachtem Anker oder mit an ihm angebrachter Spule angebracht ist.

## Claims

1. A construction element for recording a change in shape or torsion, following a measured value and allowing conclusions to be drawn about it, **characterized in that** the construction element has a mechanical part which is formed of three arms (A, B, C) protruding outwardly from a joint center or root area (21), whereby at least the first arm (B) and/or the second arm (C) is either rigidly fixed to the supporting body (1) or integrated into this supporting body, whereby the first part (2, 6, 10, 15, 27, 28, 37, 49, 57, 69, 75, 80, 85, 103, 104, 133, 152, 164) is fixed to a third arm (A), and the second part (4, 7, 26, 29, 36, 50, 60, 67, 68, 81, 165, 105, 106, 134, 153) of a two-part coil-anchor or coil-coil combination is fixed to another arm (B, C) or to another supporting body (1), whereby during operation the first part lies within an alternating magnetic field of the second part, whereby the effect of the measured force or torque value on at least the first arm (B) and/or the second arm (C) causes a change, following this measured value, in the shape or torsion of at least this first arm (B) and/or second arm (C), consequently displacing the free-ended third arm (A), whereby the magnetic coupling between the first part of the two-part coil-anchor or coil-coil combination, which is fixed to the free-ended third arm (A), and the second part, undergoes a change following the measured value, and whereby the change in the magnetic coupling enables conclusions to be drawn regarding the displacement of the third arm (A) and therefore also regarding the measured value.

2. A construction element according to claim 1, **characterized in that** to record the amount of force or torque or bend in a mechanical system and its surroundings, at least the first arm (C) is coupled or is constructed so that it can be mechanically coupled with a body (31) that forms part of the surroundings, the second arm (B) that protrudes from the joint root area in roughly the opposite direction to the first arm is mechanically coupled with either another part of the same body (31) or with a different body (32), and the first part (28) of a coil-anchor or coil-coil combination which is magnetically coupled during operation is fixed to the free-ended third arm (A), which, if necessary, is also fixed internally if the first arm (B) is hollow or the second arm (C) is hollow, and the second part (29) of the coil-anchor or coil-coil combination is fixed to one of the other arms or to the supporting body (1), whereby during operation, the anchor or the second coil lies within the alternating magnetic field of the first coil.

3. A construction element according to claim 1, **characterized in that** a main body (44 to 47; 53 to 56) is constructed in the shape of a parallelogram with two frame sections (45, 47; 54, 56) positioned opposite each other which act as parallel guide bellows, and with two other frame sections (44, 46; 53, 55) that are positioned opposite each other and which can slide roughly parallel to each other, the end of the first arm (C) is rigidly fixed to one frame section (46; 55) of the two parallel sliding frame sections (44, 46; 53, 55), and the end of the second arm (B) is rigidly fixed to another one of the frame sections (44; 53).

4. A construction element according to claim 1, **characterized in that** the two arms (B, C) which protrude from the joint root area in roughly opposite directions are rigidly fixed with their ends on the internal wall of a pipe section (65), and the free-ended third arm (A) protrudes from the joint root area through an axial section that is roughly parallel to the axis of the pipe section (65).

5. A construction element according to claim 1, **characterized in that** two three-armed construction elements are combined, whereby each has two arms (B, C; B', C') of the respective three arms (A, B, C; A, B', C') protruding from the joint root area (78; 73) that protrude in opposite directions on roughly coinciding longitudinal axes; one of these arms (C) of the construction element (A, 80, B, C) merges seamlessly into an arm (C') of the other construction element (A', 75, B', C') with coinciding longitudinal axes, and this combination acts as a bellow during operation.

6. A construction element according to claim 5, **characterized in that** when using a second magnetically coupled two-part coil-anchor or coil-coil combination (75, 76) during operation, its first part (75) is fixed to the other free-ended arm (A').

7. A construction element according to claim 1, **characterized in that** two three-armed construction elements are combined with a torque sensor, whereby two arms (A, C) of different lengths in the first construction element (A, 85, B, C) protrude from their joint root area, roughly in the direction of the root area of the second three-armed construction element (A', 86, B', C'), with the third arm (B) protruding roughly in the opposite direction, and two arms (A', C') of different lengths in the second construction element (A', 86, B', C') protrude from their joint root area, roughly in the direction of the root area of the first three-armed construction element (A, 85, B, C), with the third arm (B') protruding roughly in the opposite direction and its longitudinal axis coinciding with the longitudinal axis of the third arm (B) of the first three-armed construction element, whereby the longer arms (C; C') of each of the two construction elements merge seamlessly into the arms (A, C; A', C') of different lengths in the root area of the respective other construction element, and their shorter arms (A; A') have a free end with the appropriate axial distance to their respective counterpart (87; 88).

8. Construction elements according to claim 1, **characterized in that** the longitudinal axis of the first, free-ended arm (A) protruding from the joint root area (161) coincides with the main diameter of the rigid rim (160) surrounding the three-armed construction element (A, B, C, 164), in relation to this main diameter the second arm (B) and the third arm (C), which both act as bellows during operation, protrude from the joint root area in a mirror image to each other, and their ends merge seamlessly into the rim.

9. A construction element according to claim 8, **characterized in that**, in the joint root area (161), there are more three-armed construction elements (A', B', C', 157) of the same design.

10. A construction element according to claim 1, **characterized in that** two construction elements are combined for a torque sensor, whereby a main body, which is more or less level and centrally symmetric in relation to the center (92), is made from rigid bars (97, 98) with each having two roughly regular protruding arms (99, 101; 100, 102) on both of its sides, whereby the first arm (C) of the first construction element (A, B, C, 103), which is fixed to the same side of the bar (97, 98), merges seamlessly into the area away from the center where the first arm (99) of the main body, which also acts as a bellow, is located, and the second arm (B) of the same first construction element merges seamlessly into the area away from the center, where the second arm (101) protruding from the bar is located, and the first part (103) of a two-part coil-anchor or coil-coil combination that is magnetically coupled during operation is fixed to the free-ended third arm (A) located close to the center of the first construction element, and its second part (105) is rigidly connected to the bar (97, 98), whereby during operation the anchor or the second coil lies within the alternating magnetic field of the first coil.

11. A construction element according to claim 10, **characterized in that** on the other side of the bar there is a similar centrally symmetric arrangement with the second three-armed construction element (A', 104, B', C'), whereby in the center area of the centrally symmetric arrangement, if required, there is a recess or a trigger pin is fitted, and the centrally symmetric construction, if required, is surrounded by a rim (107), which is coaxial to the main body (97 to 100) and is rigidly connected to the main body, with serial binary coding on its shell (108) or around the edge.

12. A construction element according to claim 1, **characterized in that** the ends of the first arm (B) and the second arm (C) are rigidly fixed onto two different points of the main body (130, 131, 132) of a force sensor, whereby a bellow section (131) lies in between these two fixing points.

13. A construction element according to claim 1, **characterized in that** two three-armed construction elements are combined with a force sensor or differential pressure sensor, whereby the first arm (B) and the second arm (C) of the first three-armed construction element (A, 137, B, C) protrude from their joint root area in roughly opposite directions and together form a rough C shape, and the first part (137) of a two-part coil-anchor or coil-coil combination (137, 138) which is magnetically coupled during operation is fixed to the free-ended arm (A), and the ends of the first arm (B) and the second arm (C) of the first construction element each individually merge seamlessly into the second three-armed construction element (A', 138, B', C') which is a mirror image or centrally symmetric to the first construction element, whereby the second part (138) of the two-part coil-anchor or coil-coil combination is fixed to the free-ended third arm (A') of that second construction element, whereby during operation the anchor or the second coil is located in the alternating magnetic field of the first coil.

14. A construction element according to claim 1, **characterized in that** on a lathing tool, to record two orthogonal force components of the first arm (C) and the second arm (B) with coinciding longitudinal axes, protruding from the joint root area (150) in opposite directions to each other, forming the so-called shaft of the lathing tool, either a cutting insert is fixed to the free end of the first arm (C), or this end is shaped into a cutter (149) or into a different type of force transmission area, and the second arm (B), the end section of which is fixed in a tool holder, has a free end, and the first part (152) of the at least two-part coil-anchor or coil-coil combination (152, 153) which is magnetically coupled during operation is fixed to the free-ended third arm (A), and the second part of it (153) is fixed to the shaft (B, C).

15. A construction element according to claim 14, **characterized in that** to record the cutting force (FS) and the feed force (FV) separately, a second free-ended arm with an anchor fixed to it or with a coil fixed to it is fitted onto the shaft.

## Revendications

1. Élément de construction destiné à détecter une modification de forme ou une modification de torsion de l'élément de construction consécutive à une grandeur mesurée et laissant conclure à celle-ci, **caractérisé en ce que** l'élément de construction présente une partie mécanique, qui est formée de trois bras (A, B, C) partant d'un centre ou d'une zone de racine commun(e) (21), dans lequel au moins un premier bras (B) et/ou un deuxième bras (C) est soit monté de manière rigide sur le corps de support (1) soit intégré dans ce corps de support, dans lequel la première partie (2, 6, 10, 15, 27, 28, 37, 49, 57, 69, 75, 80, 85, 103, 104, 133, 152, 164) est montée sur un troisième bras (A) et la deuxième partie (4, 7, 26, 29, 36, 50, 60, 67, 68, 81, 165, 105, 106, 134, 153) d'une combinaison bobine-induit ou bobine-bobine à deux parties est montée sur un autre bras (B, C) ou sur un autre corps de support (1), dans lequel en fonctionnement la première partie se trouve dans un champ magnétique alternatif de la deuxième partie, dans lequel l'attaque de la grandeur mesurée sous la forme d'une force ou d'un couple sur au moins le premier bras (B) et/ou le deuxième bras (C) provoque une modification de forme ou de torsion consécutive à cette grandeur mesurée au moins de ce premier bras (B) et/ou deuxième bras (C) avec une déviation en résultant du troisième bras à extrémité libre (A), dans lequel le couplage magnétique entre la première partie, montée sur le troisième bras à extrémité libre (A), de la combinaison bobine-induit ou bobine-bobine à deux parties et la deuxième partie subit une modification consécutive à la grandeur mesurée, et dans lequel la modification du couplage magnétique permet de conclure à la déviation du troisième bras (A) et ainsi à la grandeur mesurée.

2. Élément de construction selon la revendication 1, **caractérisé en ce que** pour la détection d'une force ou d'un couple ou d'une flexion dans un système mécanique de son environnement, au moins le premier bras (C) est réalisé de manière mécaniquement accouplable ou est accouplé à un corps (31) de l'environnement, le deuxième bras (B) faisant saillie de la zone de racine commune à peu près dans la direction opposée au premier bras est couplé mécaniquement soit avec un autre endroit du même corps (31) soit avec un autre corps (32), et la première partie (28) d'une combinaison bobine-induit ou bobine-bobine couplée magnétiquement en fonctionnement est montée sur le troisième bras à extrémité libre (A), qui en cas de premier bras creux (B) ou de deuxième bras creux (C) est également monté à l'intérieur le cas échéant, et sa deuxième partie (29) est montée sur un des autres bras ou sur le corps de support (1), dans lequel en fonctionnent l'induit ou la deuxième bobine se trouve dans le champ magnétique alternatif de la première bobine.

3. Élément de construction selon la revendication 1, **caractérisé en ce qu'**un corps de base (44 à 47 ; 53 à 56) est réalisé en forme de parallélogramme avec deux sections de cadre (45, 47 ; 54, 56) opposées l'une à l'autre et faisant fonction de corps ressort d'un guidage parallèle et avec deux autres sections de cadre (44, 46 ; 53, 55) opposées l'une à l'autre et déplaçables de manière à peu près parallèle l'une contre l'autre, l'extrémité du premier bras (C) est montée de manière rigide sur une section de cadre (46 ; 55) des deux sections de cadre (44, 46 ; 53, 55) déplaçables de manière parallèle, et l'extrémité du deuxième bras (B) est montée de manière rigide sur une autre section de cadre (44 ; 53).

4. Élément de construction selon la revendication 1, **caractérisé en ce que** les deux bras (B, C) faisant saillie de la zone de racine commune à peu près dans des directions opposées sont montés de manière rigide avec leurs extrémités sur la paroi intérieure d'une pièce tubulaire (65), le troisième bras à extrémité libre (A) fait saillie de la zone de racine commune de manière à peu près axialement parallèle par rapport à la pièce tubulaire (65) au-delà d'une section partielle axiale.

5. Élément de construction selon la revendication 1, **caractérisé en ce que** deux éléments de construction à trois bras sont combinés, dans lequel respectivement deux bras (B, C ; B', C') des respectivement trois bras (A, B, C ; A', B', C') faisant saillie de zones de racine communes (78 ; 73) avec des axes longitudinaux à peu près coïncidents font saillie dans des directions opposées, un de ces bras (C) de l'un élément de construction (A, 80, B, C) avec des axes longitudinaux coïncidents se transforme de manière continue en un bras (C') de l'autre élément de construction (A', 75, B', C'), et cette combinaison fait fonction de corps ressort en fonctionnement.

6. Élément de construction selon la revendication 5, **caractérisé en ce qu'**en cas d'utilisation d'une deuxième combinaison bobine-induit ou bobine-bobine à deux parties (75, 76) couplée magnétiquement en fonctionnement, sa première partie (75) est montée sur l'autre bras à extrémité libre (A').

7. Élément de construction selon la revendication 1, **caractérisé en ce que** deux éléments de construction à trois bras sont combinés en un capteur de couple, dans lequel deux bras de longueur inégale (A, C) du premier élément de construction (A, 85, B, C) font saillie de leur zone de racine commune à peu près dans la direction de la zone de racine du deuxième élément de construction à trois bras (A', 86, B', C'), le troisième bras (B) fait saillie à peu près dans la direction opposée, deux bras de longueur inégale (A', C') du deuxième élément de construction (A', 86, B', C') font saillie de leur zone de racine commune à peu près dans la direction de la zone de racine du premier élément de construction à trois bras (A, 85, B, C), le troisième bras (B') fait saillie à peu près dans la direction opposée et son axe longitudinal coïncide avec l'axe longitudinal du troisième bras (B) du premier élément de construction à trois bras, les deux éléments de construction respectivement avec leurs bras plus longs (C, C') des bras de longueur inégale (A, C ; A', C') se transforment de manière continue en zone de racine du respectivement autre élément de construction, et leurs bras plus courts (A ; A') se terminent librement à la distance axiale adaptée par rapport à celui respectivement opposé (87 ; 88).

8. Éléments de construction selon la revendication 1, **caractérisés en ce que** l'axe longitudinal du premier bras (A) à extrémité libre et faisant saillie de la zone de racine commune (161) coïncide avec un diamètre principal de la couronne (160) plane résistante à la déformation entourant l'élément de construction à trois bras (A, B, C, 164), par rapport à ce diamètre principal le deuxième bras (B) et le troisième bras (C), lesquels font tous deux fonction de corps ressort en fonctionnement, font saillie de la zone de racine commune en miroir l'un par rapport à l'autre, et se transforment avec leurs extrémités de manière continue en couronne.

9. Élément de construction selon la revendication 8, **caractérisé en ce que** d'autres éléments de construction à trois bras (A', B', C', 157) réalisés de manière similaire sont montés dans la zone de racine commune (161).

10. Élément de construction selon la revendication 1, **caractérisé en ce que** deux éléments de construction sont combinés pour un capteur de couple, dans lequel un corps de base à symétrie centrale par rapport à un centre (92) et à peu près plan se compose d'une barre résistante à la flexion (97, 98) avec au niveau de ces deux côtés longitudinaux respectivement deux bras (99, 101 ; 100, 102) faisant saillie de manière à peu près normale sur celle-ci, le premier bras (C) du premier élément de construction (A, B, C, 103) monté sur le même côté de la barre (97, 98) se transforme de manière continue en zone éloignée du centre du premier bras (99), en même temps corps ressort, du corps de base, le deuxième bras (B) du même premier élément de construction se transforme de manière continue en zone éloignée du centre du deuxième bras (101) faisant saillie de la barre, la première partie (103) d'une combinaison bobine-induit ou bobine-bobine à deux parties couplée magnétiquement en fonctionnement est montée sur le troisième bras (A) à extrémité libre proche du centre du premier élément de construction et sa deuxième partie (105) entretient une liaison rigide avec la barre (97, 98), dans lequel en fonctionnement l'induit ou la deuxième bobine se trouve dans le champ magnétique alternatif de la première bobine.

11. Élément de construction selon la revendication 10, **caractérisé en ce qu'**un agencement analogue à symétrie centrale avec le deuxième élément de construction à trois bras (A', 104, B', C') se trouve de l'autre côté de la barre, un évidement se trouve le cas échéant dans la zone centrale de l'agencement à symétrie centrale ou une broche d'actionnement à orientation axiale est montée, et la construction à symétrie centrale est entourée le cas échéant d'une couronne (107) coaxiale au corps de base (97 à 100) et entretenant une liaison rigide avec le corps de base avec codage sériel binaire au niveau de son manteau (108) ou dans sa zone de bord.

12. Élément de construction selon la revendication 1, **caractérisé en ce que** les extrémités du premier bras (B) et du deuxième bras (C) sont montées de manière rigide à deux endroits différents d'un corps de base de capteur de force (130, 131, 132), dans lequel une section de corps ressort (131) se trouve entre ces endroits de leur montage.

13. Élément de construction selon la revendication 1, **caractérisé en ce que** deux éléments de construction à trois bras sont combinés en un capteur de force ou capteur de différence de pression, dans lequel un premier bras (B) et un deuxième bras (C) du premier élément de construction à trois bras (A, 137, B, C) font saillie de leur zone de racine commune à peu près dans des directions opposées et forment ensemble une forme à peu près en forme de C, la première partie (137) d'une combinaison bobine-induit ou bobine-bobine (137, 138) à deux parties et entretenant un couplage magnétique en fonctionnement est montée sur le troisième bras (A) à extrémité libre, les extrémités du premier bras (B) et du deuxième bras (C) du premier élément de construction se transforment individuellement de manière continue en deuxième élément de construction à trois bras (A', 138, B', C') à symétrie centrale ou à symétrie de miroir par rapport au premier élément de construction, la deuxième partie (138) de la combinaison bobine-induit ou bobine-bobine à deux parties est montée sur son troisième bras (A') à extrémité libre, dans lequel en fonctionnement l'induit ou la deuxième bobine se trouve dans le champ magnétique alternatif de la première bobine.

14. Élément de construction selon la revendication 1, **caractérisé en ce qu'**au niveau d'un outil de tournage pour la détection de deux composantes de force orthogonales, le premier bras (C) et le deuxième bras (B) avec des axes longitudinaux coïncidents font saillie de la zone de racine commune (150) dans des directions opposées l'une à l'autre et forment ledit arbre de l'outil de tournage, au niveau de l'extrémité libre du premier bras (C) soit une plaque de coupe est montée soit cette extrémité est réalisée en un tranchant (149) ou en une zone d'introduction de force autrement conçue, le deuxième bras (B) fixé en fonctionnement avec sa section d'extrémité dans un support d'outil se termine librement, la première partie (152) de la combinaison bobine-induit ou bobine-bobine (152, 153) à au moins deux parties couplée magnétiquement en fonctionnement est montée sur le troisième bras (A) à extrémité libre, sa deuxième partie (153) est montée sur l'arbre (B, C).

15. Élément de construction selon la revendication 14, **caractérisé en ce que** pour la détection séparée d'une force de coupe (FS) et d'une force de poussée (FV) au niveau de l'arbre, un deuxième bras à extrémité libre avec un induit monté sur celui-ci ou avec une bobine montée sur celui-ci est monté.
